# EUROPÄISCHE PATENTSCHRIFT

(11) **EP 2 425 517 B1**
(45) Veröffentlichungstag und Bekanntmachung des Hinweises auf die Patenterteilung: **04.03.2015**
(21) Anmeldenummer: 10720140.2
(22) Anmeldetag: 29.04.2010
(51) Int. Cl.: H02K 5/14, H02K 13/00, H01R 39/59, H01R 39/20, H01R 39/38

(54) **BÜRSTENAPPARAT FÜR EINE ELEKTRISCHE MASCHINE SOWIE ELEKTRISCHE MASCHINE**
BRUSH APPARATUS FOR AN ELECTRIC MACHINE AND ELECTRIC MACHINE
DISPOSITIF À BALAIS POUR MACHINE ÉLECTRIQUE ET MACHINE ÉLECTRIQUE

(30) Priorität: 29.04.2009 DE 102009002725
(43) Veröffentlichungstag der Anmeldung: 07.03.2012
(73) Patentinhaber: Robert Bosch GmbH, 70442 Stuttgart (DE)
(72) Erfinder: BOTZENHARD, Thomas, 71665 Vaihingen/Enz (DE); BAYER, Michael, 71636 Ludwigsburg (DE); GERSCHWITZ, Walter, 71297 Moensheim (DE)
(86) Internationale Anmeldenummer: PCT/EP2010/055792
(87) Internationale Veröffentlichungsnummer: WO 2010/125137

(56) Entgegenhaltungen:
- DE-A1- 10 041 822
- JP-A- 10 066 311

## Beschreibung

### Stand der Technik

Die Erfindung bezieht sich auf einen Bürstenapparat für eine elektrische Maschine, insbesondere einen Starter zum Starten einer Brennkraftmaschine, mit Bürsten, die mindestens ein Bürstenpaar umfassen, wobei jede Bürste in einer Bürstenfassung untergebracht ist, jede Bürstenfassung zumindest an einer axialen Stirnseite an einer Bürstenplatte befestigt ist, jede Bürste abwechselnd entweder mit einem Minuspol oder einem Pluspol über eine Stromführungseinrichtung zu einem Bürstenpaar in Reihe schaltbar ist, die Bürstenplatte mit Anschlusslitzen zu minuspolseitigen Bürsten und eine Stromschiene mit Anschlusslitzen zu pluspolseitigen Bürsten jeweils als Stromführungseinrichtung ausgebildet sind.

Die Erfindung bezieht sich auch auf eine elektrische Maschine, insbesondere einen Starter, für eine Brennkraftmaschine mit einem Kommutator und mit einem insbesondere oben beschriebenen Bürstenapparat, wobei auf dem Kommutator Bürsten mit mindestens zwei Bürstenpaaren zueinander versetzt schaltbar angeordnet sind, wobei jede Bürste in einer Bürstenfassung untergebracht ist, jede Bürstenfassung an einer axialen Stirnfassung an einer Bürstenplatte befestigt ist, jede Bürste abwechselnd entweder mit einem Minuspol oder einem Pluspol über eine Stromführungseinrichtung zu einem Bürstenpaar in Reihe schaltbar ist, die Bürstenplatte mit Anschlusslitzen zu minuspolseitigen Bürsten und eine Stromschiene mit Anschlusslitzen zu pluspolseitigen Bürsten jeweils eine Stromführungseinrichtung ausbilden.

Es ist bekannt zum Starten von Brennkraftmaschinen mechanisch kommutierte Gleichstrommotoren als elektrische Maschinen einzusetzen. Strom wird über ein oder mehrere Bürstenpaare über den Kommutator in die Ankerwicklung eingeschaltet. Die elektrischen Maschinen, Starter genannt, sind für einen kurzzeitigen Betrieb ausgelegt mit normalerweise 30 bis 60.000 Schaltzyklen. Die Bürsten sind aus einem Sinterwerkstoff mit im Wesentlichen Kupfer- und Graphitanteilen hergestellt.

Es ist bekannt, dass für höhere Lasten mit längeren Laufzeiten, beispielsweise für Start-Stopp-Systeme möglichst viele Kohlebürstenpaare in dem Starter für eine möglichst lange Lebensdauer eingesetzt werden. Es ist also bekannt, in Starter für Start-Stopp-Systeme statt - wie bisher üblich - 4-Kohlebürsten auch 6-Kohlebürsten einzusetzen.

Es ist ferner bekannt, einen Überlastschutz einzubauen, um zu verhindern, dass äußere Komponenten in der elektrischen Maschine sich stark erwärmen, glühen oder selbst zerstören. Ein Überlastfall kann wegen einer zu langen Ansteuerung des Starters ohne einem Anspringen der Brennkraftmaschine auftreten, sowie aufgrund von internen Starterfehlern. Beispielsweise ist folgender Stand der Technik bekannt:
Die DE 100 41 822 A1 beschreibt eine elektrische Startvorrichtung für eine Brennkraftmaschine mit einem Startermotor. Im Startermotor ist ein Kommutatorläufer mit Überlastschutz im Hauptstromkreis geschaltet. Der Überlastschutz ist als Schmelzsicherung durch mindestens eine im Querschnitt geschwächte Anschlusslitze zwischen einer pluspolseitigen Anschlussschiene und Kohlebürsten ausgebildet.

Es ist Aufgabe der Erfindung, einen Bürstenapparat sowie eine elektrische Maschine der eingangs genannten Art derart weiter zu bilden, so dass möglichst einfach ein Schutz gegen Beschädigungen aufgrund von thermischer Überlast an einer elektrischen Maschine erzielt wird.

### Offenbarung der Erfindung

Erfindungsgemäß wird die Aufgabe durch den Gegenstand der Patentansprüche 1 und 13 gelöst. Die abhängigen Ansprüche definieren bevorzugte Weiterbildungen der Erfindung.

Es ist ein Gedanke der Erfindung, eine Vorrichtung zur Reduktion einer Wärmeabfuhr in mindestens einer Stromführungseinrichtung vorzusehen. Aufgrund eines intensiveren Einsatzes von Startern in neuen Fahrzeuggenerationen durch Start-Stopp-Systeme mit höheren Zyklen und höheren Drehzahlen erwärmen sich die Bürsten am Komutator schneller und stärker. Eine Wärmeabfuhrreduktionsvorrichtung verhindert, dass Wärme außerhalb einer elektrischen Maschine beispielsweise über eine Anschlußlitze zu schnell und mit zu hoher Wärmeenergie transportiert wird. Somit werden Außentemperaturen von der elektrischen Maschine niedrig gehalten. Gefahren einer Zerstörung der elektrischen Maschine aufgrund zu hohen Temperaturen an Bauteilen, insbesondere außerhalb, der Maschine werden vermindert und vorzugsweise verhindert. Es ist somit eine Abtrennung der an den Bürsten entstehenden Wärme zu den außenliegenden Bauteilen der Maschine verwirklicht

Um einen noch wirksameren thermischen Schutz gemäß einer weiter bevorzugten Ausführungsform zu realisieren, ist mindestens eine Stromführungseinrichtung mit einer Schmelzsicherung im Bürstenapparat ausgebildet. Somit schmilzt die Sicherung bei einer Überhitzung des Starters beziehungsweise des Bürstenapparats durch. Die Gefahr einer weiteren Schädigung des Starters und weiteren Teilen am Bürstenapparat wird somit wirksam vermieden.

Die Aufgabe wird auch mit einer elektrischen Maschine dadurch gelöst, dass mindestens eine Stromführungseinrichtung mit einer Vorrichtung zur Reduktion einer Wärmeabfuhr ausgebildet ist.

Es hat sich als vorteilhaft herausgestellt, dass mindestens eine Stromführungseinrichtung, insbesondere von Bürsten einer ersten Polarisierung, mit einer Schmelzsicherung ausgebildet ist, wohingegen eine zweite Stromführungseinrichtung von Bürsten der anderen Polarisierung ohne Schmelzsicherung ausgebildet ist. Die Schmelzsicherung ist ein thermisch weitergehender Schutz als die Vorrichtung zur Wärmeabfuhrredukiton, die bei unerwünschten Spitzentemperaturen größere Beschädigungen oder Gefahren verhindert

Um den Stromfluss möglichst sicher zu unterbrechen, ist bevorzugt die pluspolseitige Stromführungseinrichtung mit einer Schmelzsicherung ausgebildet.

Um die Vorrichtung zur Wärmeabfuhrreduktion oder die Schmelzsicherung möglichst einfach auszubilden, ist die Schmelzsicherung und oder die Wärmeabfuhrreduktionsvorrichtung als Materialschwächung ausgebildet. Gemäß einer besonders bevorzugten Ausführungsform ist die Stromschiene als Teil von der Stromführungseinrichtung mit einer Materialschwächung ausgebildet. Die Stromschiene bildet eine Verbindung mit einem Schaltrelais pluspolseitig, sowie über Anschlusslitzen eine Verbindung zu pluspolseitigen Bürsten. Die Bürsten laufen auf einem Kommutator der elektrischen Maschine, da die Stromschiene meist breit ausgebildet ist, ist eine Dimensionierung der Materialschwächung sehr definiert einstellbar.

Gemäß einer vorteilhaften Ausführungsform, die besonders einfach realisierbar ist, weist die Stromführungseinrichtung als Materialschwächung mindestens eine, zumindest einseitig ausgebildete Nut auf. Damit ist eine Querschnittsverringerung der Stromführungseinrichtung durch eine Kerbe verwirklicht.

Bei einem Bürstenapparat mit drei Bürstenpaaren, also 6-Kohlebürsten, ist die Stromschiene vorteilhafterweise ringförmig ausgebildet, an der alle sechs Bürstenfassungen befestigt sind. Die Bürstenfassungen sind beispielsweise in der Stromschiene eingehängt. Die Stromschiene bildet somit einen Halter für die Bürstenfassungen.

Um die Schmelzsicherung noch wirksamer auszubilden, ist bevorzugt mindestens eine Nut am Außenring und zumindest eine Nut am Innenring ausgebildet. Somit wird die Stromschiene mit einer definierten hochwirksamen Schmelzsicherung gezielt geschwächt. Als Außen- und Innenring ist jeweils die äußere oder innere Umfangsfläche der ringförmigen Stromschiene zu verstehen.

Gemäß einer weiter bevorzugten Ausführungsform ist die Stromschiene beidseitig an der inneren und äußeren Umfangsfläche gleich geschwächt ausgebildet ist. Dies hat den Vorteil, dass die Erwärmung gleichmäßig wirkt. Die Stromschiene wird mechanisch durch Schüttelbeansrpuchung und elektrisch durch den elektrischen Widerstand belastet. Eine gleichmäßige Schwächung hat den Vorteil außerdem, dass eine Vorzugsrichtung vermieden wird.

Gemäß einer alternativen Ausführungsform ist die Stromschiene an den inneren und äußeren, axialen Umfangsflächen her unterschiedlich stark geschwächt ausgebildet. Eine solche Ausbildungsform kann typabhängig vorteilhaft sein.

Um die Materialschwächung möglichst einfach auszubilden, ist die mindestens eine Nut im Wesentlichen eckförmig, insbesondere mit abgerundeten Fasen, ausgebildet. Die abgerundeten Fasen sind sowohl bezüglich der radialen Stirnansicht als auch in axialer Richtung verstellbar. Dadurch sind der Materialeinsatz und die Wirkung optimiert.

Gemäß einer die Erfindung weiterbildenden Ausführungsform ist alternativ zusätzlich zur Schwächung der Stromschiene die Anschlusslitze einer Polarität zwischen Stromschiene und Bürste oder Bürstenplatte und Bürste geschwächt ausgebildet. Somit sind die Bürstenfassungen mit im Wesentlichen gleichen Kräften stirnseitig von der Stromschiene gehalten. Die Schmelzsicherung oder Vorrichtung zur Reduktion der Wärmeabfuhr umfassen somit mindestens eine Anschlusslitze als Teil der Stromführungseinrichtung entweder an den plus- oder minuspolseitigen Bürsten.

Bevorzugt ist zumindest eine pluspolseitige Anschlusslitze an einer Stelle im Querschnitt mit einem Verhältnis von bis zu ca. 1/3 zum Querschnitt zu mindestens einer minuspolseitigen Anschlusslitze geschwächt oder verjüngt ausgebildet. Bei einem Kurzschluss, der zu einer Erwärmung führt, wird die Stromleitung somit schnell an der geschwächten pluspolseitigen Anschlusslitze unterbrochen.

Es hat sich als besonders vorteilhaft herausgestellt, dass bei einer Vielzahl von mehreren Anschlusslitzen einer Polarität das Gesamtverhältnis von Außenquerschnitt der Aussenlitze zur Summe von geschwächten Anschlußitzenquerschnitten von allen Bürsten kleiner 0,5 ist.

Zumindest sollten vorzugsweise die Litzenquerschnitte kleiner gleich 20% bei Plusbürsten als die Litzenquerschnitte von Minusbürsten verjüngt sein.

Typspezifisch und auslegungsbedingt kann es bei einem langen Betrieb des Ankers beziehungsweise der elektrischen Maschine zu einer unterschiedlichen Erwärmung von minus- und pluspolseitigen Bürsten kommen. Dabei sind der jeweilige Anbau des Bürstenapparats sowie die Kommutierungswinkel der einzelnen Bürsten für die spezifische Erwärmung der minus- oder pluspolseitigen Anschlüsse wesentlich.

Gemäß einer alternativen bevorzugten Ausführungsform, bei der beispielsweise die minuspolseitigen Bürsten signifikant stärker erwärmt werden als die pluspolseitigen Bürsten, ist bevorzugt der Unterschied der Querschnitte der minuspolseitigen Bürsten um bis zu ca. 1/5 kleiner oder gleich als der Querschnitt der Anschlusslitzen von pluspolseitigen Bürsten. Auch in diesem Fall sollte das Gesamtverhältnis von Außenlitze zu dem geschwächten Litzenquerschnitt von allen Bürsten kleiner gleich 0,5 multipliziert mit der Summe aller Querschnitte von den Anschlusslitzen einer bestimmten Polarität sein. Somit wird sicher vermieden, dass bei Überhitzung Teile vom Bürstenapparat oder von der elektrischen Maschine im Überlastfall stärker beschädigt oder zerstört werden.

Um hohen Rotationsgeschwindigkeiten und hohen Temperaturanforderungen gerecht zu werden, ist bevorzugt der Kommutator mit Halteringen in den Kommutatorlamellen armiert ausgebildet. Vorzugsweise sind die Halteringe beidseitig an den Stirnseiten ausgebildet.

Es versteht sich, dass die vorstehend genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig. 1: einen Querschnitt eines Ausschnitts einer elektrischen Maschine mit einem Bürstenapparat,
- Fig. 2: eine radiale Schnittansicht eines Bürstenapparats gemäß einer ersten Ausführungsform,
- Fig. 3: eine radiale Schnittansicht gemäß einer zweiten bevorzugten Ausführungsform,
- Fig. 4: eine radiale Schnittansicht eines Bürstenapparats gemäß einer dritten besonderen Ausführungsform,
- Fig. 5: eine radiale Schnittansicht eines Bürstenapparats gemäß einer vierten besonderen Ausführungsform und
- Fig. 6: eine radiale Schnittansicht eines Bürstenapparats gemäß einer fünften besonderen Ausführungsform.

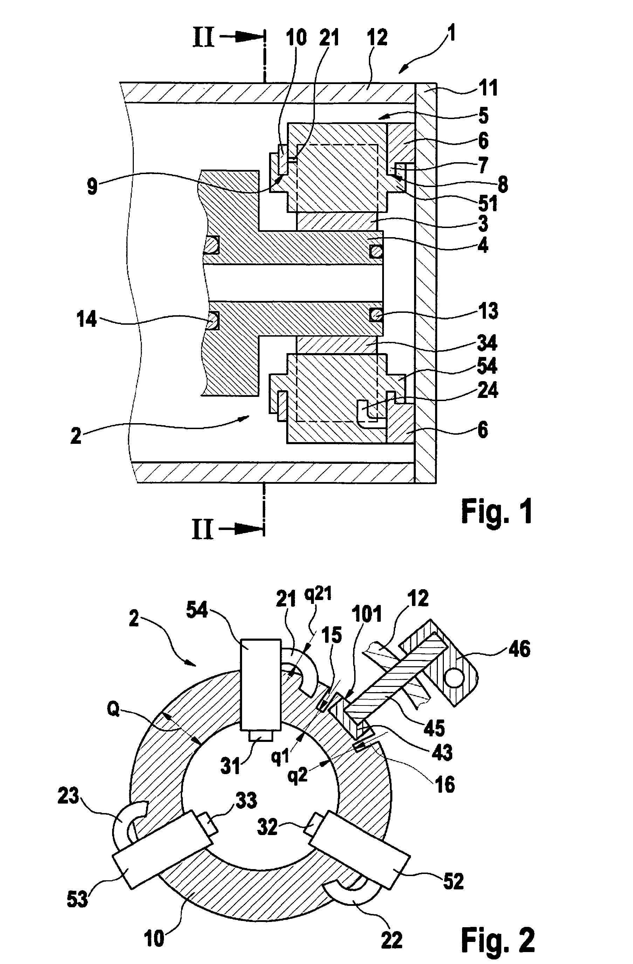

Die Fig. 1 zeigt eine axiale Querschnittsansicht eines Ausschnitts einer elektrischen Maschine 1 von einem Bürstenapparat 2. Der Bürstenapparat 2 ist mit Bürstenpaaren ausgebildet, wobei die Fig. 1 zwei Bürsten 3, 34 zeigt, die auf einem Kommutator 4 laufen. In einer Bürstenfassung 5 ist eine nicht dargestellte Feder vorgespannt, um die Bürste 3 gegen den Kommutator 4 zu drücken. Die Bürstenfassung 5 ist an einer Bürstenplatte 6 befestigt.

Die Fig. 1 zeigt, dass die Bürstenfassung 5 an der Bürstenplatte 6 über eine Hinterschneidung, über eine sogenannte Nut-Feder-Verbindung, befestigt ist. Eine Hervorhebung 7 der Bürstenplatte 6, die ringförmig ist, greift in eine Nut 8 der Bürstenfassung 5 ein. Damit ist die Bürstenfassung 5 an einer axialen Stirnseite an der Bürstenplatte 6 befestigt. Auf der gegenüberliegenden axialen Stirnseite ist die Bürstenfassung 5, 54 mit einer Nut 9 in eine ringförmige Stromschiene 10 eingesteckt. Die Stromschiene 10 ist somit ein zweites Befestigungsmittel, um die Bürstenfassung 5 zu halten. Die Stromschiene 10 ist mit einem Starterrelais verbunden, das am Pluspol einer Batterie angeschlossen ist. Über das Starterrelais wird die elektrische Maschine mit Strom beaufschlagt.

Abwechselnd sind die aus einem Kupfer-Kohle-Werkstoff gesinterten Bürsten 3 entweder mit der Stromschiene 10 über eine Anschlusslitze 21 mit der Stromschiene 10 oder über eine Anschlusslitze 24 mit der Bürstenplatte 6 elektrisch leitend verbunden. Die in der Fig. 1 dargestellte obere Bürste 3 ist eine pluspolseitige Bürste 31. Die Stromschiene 10 bildet zusammen mit der Anschlusslitze 21 eine Stromführungseinrichtung. Die Bürstenplatte 6 ist an Masse, das heißt an den Minuspol, angeschlossen. Die Bürstenplatte 6 wird von einem Kommutatorlagerdeckel 11 getragen, der ein Polgehäuse 12 stirnseitig schließt.

Die Fig. 1 zeigt eine weitere Bürstenfassung 51, in der eine Bürste 34 gelagert ist, die mittels einer Anschlusslitze 24 mit der Minuspolseite, also der Masse, über die Bürstenplatte 6 verbunden ist. Die Anschlusslitze 24 und die Bürstenplatte 6 bilden auch eine Stromführungseinrichtung. Wenigstens eine Stromführungseinrichtung weist die gemäß einer besonderen Ausführungsform an mindestens einer Stelle einen geschwächten Querschnitt auf

Damit der Kommutator 4 hohen Drehzahlen und einer höheren Erwärmung standhält, ist der Kommutator 4 im Inneren beidseitig mit Halteringen 14 armiert.

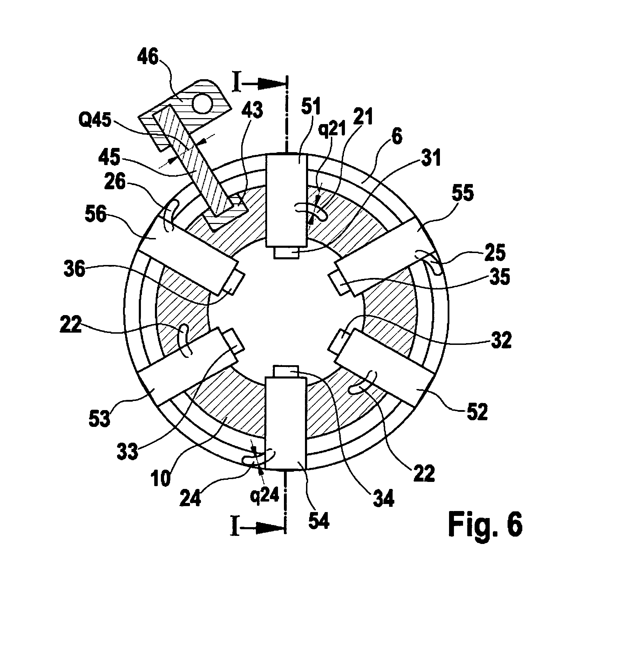

Die Fig. 2 zeigt eine radiale Schnittansicht eines Bürstenapparates 2 gemäß einer ersten besonders bevorzugten Ausführungsform. Die Bürstenfassungen 51, 52, 53 sind zueinander radial um 120°, wie in der Fig. 1 gezeigt, an der Stromschiene 10 versetzt angeordnet. Zur besseren Befestigung sind die Bürstenfassungen 51, 52 und 53 an der Stromschiene 10 zur Stromführung festgeschweißt. Zwischen den pluspolseitigen Bürstenfassungen 51, 52, 53 sind Bürstenfassungen 54, 55 und 56 mit einer minuspolseitigen Anschlusslitze, wie in der Fig. 6 gezeigt, jeweils der pluspolseitigen Bürstenfassung gegenüberliegend angeordnet. Die minuspolseitigen Bürstenfassungen sind zur vereinfachenden Darstellung in der Fig. 2 und den folgenden Figuren bis 5 weggelassen worden. Die minuspolseitigen Bürstenfassungen sind also auch um 120° radial zueinander versetzt angeordnet. Die Bürsten 31, 32 und 33 sind jeweils über eine Anschlusslitze 21, 22, 23 mit der Stromschiene 10 elektrisch leitend verbunden. Die Stromschiene 10 bildet mit den Anschlusslitzen 21, 22, 23 eine erste erfindungsgemäße Stromführungseinrichtung.

Die Stromführungseinrichtung ist zumindest mit einer Vorrichtung zur Reduktion der Wärmeabfuhr weiter bevorzugt mit mindestens einer Schmelzsicherung ausgebildet, um einen Strom bei thermischer Überlast zu unterbrechen und den Bürstenapparat 2 sowie die elektrische Maschine 1 vor einem größeren Schaden zu bewahren. An der Stromschiene 10 ist eine pluspolseitige Litze 45 mit einem Kabelschuh 46 mit einer Verankerung 43 festgeschweißt. Mit der Litze 45 wird eine elektrische Verbindung zwischen der Stromschiene 10 und einem Anschlusspunkt vom Starterrelais geschaffen.

Gemäß einer ersten besonderen Ausführungsform ist die Stromschiene 10 als Wärmeabfuhrreduktionsvorrichtung oder Schmelzsicherung geschwächt ausgebildet, indem zumindest einseitig oder wie in der Fig. 2 gezeigt, beidseitig zur Verankerung 43 rechteckförmige Nuten 15, 16 ausgebildet sind. Die Nuten 15, 16 reduzieren einen axialen Querschnitt Q von der Stromschiene 10 zu kleinen, durchschmelzbaren Querschnitten q1 und q2. Die Querschnitte q1 und q2 sind somit gegenüber dem äußeren Querschnitt Q derart verjüngt ausgebildet, so dass sich selbst bei Erwärmung zur Stromunterbrechung leicht durchtrennen. Die Schwächung der Stromschiene 10 an den verjüngten Querschnitten q1, q2 führt neben der Funktion als Schmelzsicherung auch zur Verringerung der Wärmeabfuhr von den Bürsten 31-33 bzw. Anschlußlitzen 21-23 an den Bürsten in Richtung der angeschweißten Litze 45. Die Schwächung ist bei einfacher thermischer Belastung eine Vorrichtung zur Reduktion der Wärmeabfuhr und bei erhöhter thermischer Belastung über einer definierten Belastungsschwelle wird daraus eine Schmelzsicherung.

Grundsätzlich läuft der Erwärmungsvorgang wie folgt ab. Die Bürsten 31-33 werden aufgrund von Reibung und elektrischer Belastung heiß. Die Anschlußlitzen 21-23 erwärmen sich aufgrund elektrischer Belastung und einer Wärmeleitung von den Bürsten 31-33. Dadurch wird die Stromschiene 10 ebenfalls erwärmt. Die Stromschiene 10 hat verjüngte Querschnitte q1, q2, dadurch ist eine Wärmeleitung eingeschränkt, so dass über die Verankerung 43 die Litze 45 eine deutlich geringere Wärmeerhöhung erfährt und die Außentemperaturen deutlich langsamer und in einem geringeren Maß ansteigen. Somit erfolgt eine wichtige Abtrennung der an den Bürsten 31-33 entstehenden Wärme von den außenliegenden Bauteilen.

Alternativ bilden die Anschlusslitzen 21 bis 26, wie zur Fig. 6 beschrieben, eine Schmelzsicherung, indem sie einzeln vollständig mit einem kleineren Querschnitt ausgebildet sind oder örtlich an bestimmten Stellen verjüngte Querschnitte q21-26 aufweisen.

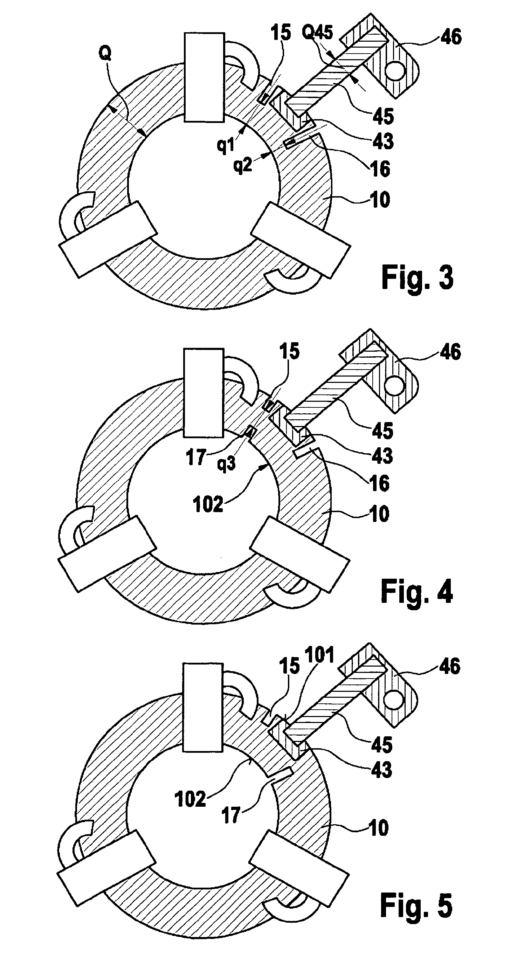

Die Fig. 3 unterscheidet sich von der Fig. 2 dadurch, dass die Nut 16 zur Verjüngung des Querschnitts Q der Stromschiene 10 stärker als die Nut 15 ausgeprägt ist und somit eine wirksamere Schmelzsicherung bildet, als beispielsweise nur eine Nut 15, die auf der anderen Seite der Verankerung 43 von der Litze 45 in der Stromschiene 10 ausgebildet ist. Eine solche Ausführungsform kann für bestimmte Typen von Bürstenapparaten 2 besonders vorteilhaft sein.

Die Fig. 4 zeigt eine weitere alternative bevorzugte Ausführungsform in Abwandlung zur Fig. 2 und 3. Hier ist zusätzlich im radialen Querschnitt gesehen zu den Nuten 15 und 16, die beidseitig zur Verankerung 43 von der Litze 45 mit unterschiedlich starken Ausprägungen ausgebildet sind, eine Nut 17 vorgesehen. Die Nut 17 ist nicht an der äußeren Umfangsfläche der Stromschiene 10 ausgebildet, sondern bildet von innen her, von der inneren Umfangsfläche, eine Verjüngung gegenüberliegend zur Nut 15. Aufgrund der gegenüberliegende Nuten 15, 17 ist die Materialverjüngung q3 nun in der Mitte der Stromschiene 10. Die Nuten 15, 16, 17 in den Figuren 2 bis 5 sind im Querschnitt gesehen rechteckig und eckig dargestellt. Dies führt zu einer besonders wirksamen Schmelzsicherung. Es versteht sich, dass die Ecken abgerundet, das heißt auch mit Fasen, mit größeren oder kleineren Abrundungsradien ausgebildet sein können.

Die Fig. 5 zeigt eine weitere alternative Ausführungsform. Die Nut 15 ist an der äußeren Umfangsfläche 101 von der Stromschiene 10 auf der einen Seite der Litze im Querschnitt gesehen, ausgebildet. Diagonal bezüglich der Litze 45 im Querschnitt gesehen, ist eine Nut 17 mit einer stärkeren Ausprägung von der Innenumfangsfläche 102 von der Stromschiene 10 her ausgebildet. Je nach Belastungsanforderungen und spezifischer Auslegung des Starters, kann die eine oder andere Ausführungsform gemäß der Fig. 2 bis 5 vorteilhaft sein.

Die Fig. 6 zeigt eine weitere alternative Ausführungsform, bei der als Stromführungseinrichtung nicht die Stromschiene 10 oder die Bürstenplatte 6 mit einem verjüngten Querschnitt zumindest an einer Stelle ausgebildet ist, sondern die Anschlusslitzen 21, 22, 23, 24, 25, 26 von der Minuspolseite oder der Pluspolseite sind verjüngt oder haben insgesamt einen kleineren Querschnitt. Die Fig. 6 ist repräsentativ für eine Vielzahl von verschiedenen möglichen Ausführungsformen. Gemäß einer ersten besonderen Ausführungsform sind beispielsweise die Querschnitte q21 der Anschlusslitzen 21 um ca. 1/3 kleiner als gegenüber dem Querschnitt q24 der Anschlusslitze 24 der minuspolseitigen Bürste 34. Beispielsweise weist die Anschlusslitze 24 einen Querschnitt q24 von 4 mm² auf, der größer oder gleich ist als der Querschnitt q21 von 3 mm² an der Anschlusslitze 21 der pluspolseitigen Bürste 31.

Zusätzlich oder gemäß einer alternativen Ausführungsform ist der Anschlusslitzenquerschnitt nur an einer Stelle geschwächt. Das Gesamtverhältnis der pluspolseitigen Außenlitze, das heißt der Litze 45, zum gesamten geschwächten Litzenquerschnitt aller Bürsten von einer Polarität, das heißt beispielsweise der Pluspolpolarität sollte derart sein, dass der Querschnitt Q45 der Außenlitze 45 kleiner ist als 0,5 multipliziert mal der Summe der Querschnitte der Anschlusslitzen 21, 22, 23.Gemäß einer weiteren alternativen Ausführungsform sind die Querschnitte der Anschlusslitzen 21 bis 26 gezielt verringert mit folgendem Verhältnis. Der Querschnitt der Anschlusslitzen 21 bis 23 von den pluspolseitigen Bürsten 31 bis 33 ist kleiner gleich 4/5 vom Querschnitt der Anschlusslitzen 24 bis 26 der minuspolseitigen Bürsten 34 bis 36.

Es kann je nach Auslegung der elektrischen Maschine und dem jeweiligen Einsatzort auch vorkommen, dass die genannten Verhältnisse nicht für die Anschlusslitzen der Pluspolseite gelten, sondern umgekehrt für die Anschlusslitzen der Minuspolseite.

Alle Figuren zeigen lediglich schematische, nicht maßstabsgerechte Darstellungen. Im Übrigen wird insbesondere auf die zeichnerischen Darstellungen für die Erfindung als wesentlich verwiesen.

## Patentansprüche

1. Bürstenapparat (2) für eine elektrische Maschine, insbesondere einen Starter zum Starten einer Brennkraftmaschine mit Bürsten (3), die mindestens ein Bürstenpaar umfassen, wobei jede Bürste (3) in einer Bürstenfassung (5) untergebracht ist, jede Bürstenfassung (5) an einer axialen Stirnseite an einer Bürstenplatte (6) befestigt ist, jede Bürste (3) abwechselnd entweder mit einem Minuspol oder einem Pluspol über eine Stromführungseinrichtung zu einem Bürstenpaar in Reihe schaltbar ist, die Bürstenplatte (6) mit Anschlusslitzen zu minuspolseitigen Bürsten (3) und eine Stromschiene (10) mit Anschlusslitzen zu pluspolseitigen Bürsten (3) jeweils als Stromführungselement ausgebildet sind, wobei mindestens eine Stromführungseinrichtung als Vorrichtung zur Reduktion einer Wärmeabfuhr und/oder Schmelzsicherung und die Stromführungseinrichtung mit einer zumindest einseitigen Materialschwächung in der Stromschiene (10) ausgebildet ist.

2. Bürstenapparat (2) nach Anspruch 1, **dadurch gekennzeichnet, dass** mindestens eine Stromführungseinrichtung von Bürsten (3) einer Polarisierung mit einer Schmelzsicherung ausgebildet ist.

3. Bürstenapparat (2) nach Anspruch 1 oder 2, **dadurch gekennzeichnet, dass** die pluspolseitige Stromführungseinrichtung mit einer Schmelzsicherung ausgebildet Ist

4. Bürstenapparat (2) nach Anspruch 3, **dadurch gekennzeichnet, dass** die Materialschwächung in der Stromschiene (10) durch zumindest eine Nut (15, 16, 17) zumindest einseitig ausgebildet ist.

5. Bürstenapparat (2) nach einem der Ansprüche 2 bis 4, **dadurch gekennzeichnet, dass** die Materialschwächung in einer ringförmigen Stromschiene (10), die insbesondere als Halter von Bürstenfassungen (5) ausgebildet ist, mit zumindest einer Nut (15, 16, 17) am Außenring und zumindest einer Nut (15, 16, 17) am Innenring ausgebildet ist.

6. Bürstenapparat (2) nach einem der Ansprüche 1 bis 5, **dadurch gekennzeichnet, dass** die Stromschiene 10 beidseitig an der inneren und äußeren axialen Umfangsfläche (101, 102) gleich geschwächt ausgebildet ist.

7. Bürstenapparat (2) nach einem der Ansprüche 1 bis 6, **dadurch gekennzeichnet, dass** die Stromschiene 10 an den inneren und äußeren axialen Umfangsflächen (101, 102) unterschiedlich stark ausgebildet ist,

8. Bürstenapparat (2) nach einem der Ansprüche 1 bis 7, **dadurch gekennzeichnet, dass** die mindestens eine Nut (15, 16, 17) im Wesentlichen eckförmig, insbesondere mit abgerundeten Fasen, ausgebildet ist.

9. Bürstenapparat (2) nach einem der Ansprüche 1 bis 8, **dadurch gekennzeichnet, dass** zumindest eine Anschlusslitze (21-26) einer Polarität geschwächt ausgebildet ist.

10. Bürstenapparat (2) nach einem der Ansprüche 1 bis 9, **dadurch gekennzeichnet, dass** zumindest eine pluspolseitige Anschlusslitze (21, 22, 23) mit einem Verhältnis von bis zu ca. 1/3 zum Querschnitt mindestens einer minuspolseitigen Anschlusslitze (24, 25, 26) geschwächt ausgebildet ist

11. Bürstenapparat (2) nach einem der Ansprüche 1 bis 10, **dadurch gekennzeichnet, dass** bei einer Vielzahl von mehreren Anschlusslitzen (21 bis 26) einer Polarität das Gesamtverhältnis von Außenquerschnitt (Q45) der Aussenlitze (45) zur Summe von geschwächten Querschnitten der Anschlusslitzen (21 bis 26) von allen Bürsten (21 bis 26) einer Polarität kleiner 0,5 ist.

12. Bürstenapparat (2) nach einem der Ansprüche 1 bis 11, **dadurch gekennzeichnet, dass** der Querschnitt (q24-q26) der Minuspollitzen (24, 25, 26) kleiner gleich 1/5 als der Querschnitt (q21-q23) der Pluspollitzen (21, 22, 23) geschwächt ausgebildet ist.

13. Elektrische Maschine, insbesondere Starter für eine Brennkraftmaschine, mit einem Kommutator (4) und einem Bürstenapparat (2), insbesondere nach einem der Ansprüche 1 bis 14, wobei auf dem Kommutator (4) Bürsten (3) mit mindestens einem Bürstenpaar zueinander versetzt laufbar angeordnet sind, wobei jede Bürste (3) in einer Bürstenfassung (5) untergebracht ist, jede Bürstenfassung (5) an einer axialen Stirnseite an einer Bürstenplatte (6) befestigt ist, jede Bürste (3) abwechselnd entweder mit einem Minuspol oder einem Pluspol über eine Stromführungseinrichtung zu einem Bürstenpaar in Reihe schaltbar ist, die Bürstenplatte (6) mit Anschlusslitzen zu minuspolseitigen Bürsten (3) und eine Stromschiene (10) mit Anschlusslitzen zu pluspolseitigen Bürsten (3) jeweils eine Stromführungseinrichtung ausbilden, **wobei** mindestens eine Stromführungseinrichtung als Vorrichtung zur Reduktion einer Wärmeabfuhr und/oder Schmelzsicherung und die Stromführungseinrichtung mit einer zumindest einseitigen Materialschwächung in der Stromschiene (10) ausgebildet ist.

## Claims

1. Brush apparatus (2) for an electrical machine, in particular a starter for starting an internal combustion engine, having brushes (3) which comprise at least one pair of brushes, wherein each brush (3) is accommodated in a brush holder (5), each brush holder (5) is fastened to an axial end face of a brush plate (6), each brush (3) can be connected in series alternately either to a negative pole or a positive pole by means of a current-carrying device to form a pair of brushes, the brush plate (6) with pigtail leads to negative pole-side brushes (3) and a busbar (10) with pigtail leads to positive pole-side brushes (3) are each designed as a current-carrying element, wherein at least one current-carrying device is designed as an apparatus for reducing heat dissipation and/or a fuse, and the current-carrying device is designed with a material weakening in the busbar (10) at least on one side.

2. Brush apparatus (2) according to Claim 1, **characterized in that** at least one current-carrying device of brushes (3) of one polarization is designed with a fuse.

3. Brush apparatus (2) according to Claim 1 or 2, **characterized in that** the positive pole-side current-carrying device is designed with a fuse.

4. Brush apparatus (2) according to Claim 3, **characterized in that** the material weakening in the busbar (10) is formed by at least one slot (15, 16, 17) on at least one side.

5. Brush apparatus (2) according to one of Claims 2 to 4, **characterized in that** the material weakening in an annular busbar (10), which is designed as a holding means for brush holders (5) in particular, is designed with at least one slot (15, 16, 17) on the outer ring and at least one slot (15, 16, 17) on the inner ring.

6. Brush apparatus (2) according to one of Claims 1 to 5, **characterized in that** the busbar (10) is designed such that it is weakened to the same extent on both sides on the inner and the outer axial circumferential face (101, 102).

7. Brush apparatus (2) according to one of Claims 1 to 6, **characterized in that** the busbar (10) is designed with different thicknesses on the inner and outer axial circumferential faces (101, 102).

8. Brush apparatus (2) according to one of Claims 1 to 7, **characterized in that** the at least one slot (15, 16, 17) is of substantially angular design, in particular is designed with rounded chamfers.

9. Brush apparatus (2) according to one of Claims 1 to 8, **characterized in that** at least one pigtail lead (21-26) of one polarity is designed such that it is weakened.

10. Brush apparatus (2) according to one of Claims 1 to 9, **characterized in that** at least one positive pole-side pigtail lead (21, 22, 23) is designed such that it is weakened by a ratio of up to approximately 1/3 in relation to the cross section of the at least one negative pole-side pigtail lead (24, 25, 26).

11. Brush apparatus (2) according to one of Claims 1 to 10, **characterized in that**, when there are a large number of several pigtail leads (21 to 26) of one polarity, the total ratio of outside cross section (Q45) of the outer lead (45) in relation to the sum of weakened cross sections of the pigtail leads (21 to 26) of all of the brushes (21 to 26) of one polarity is less than 0.5.

12. Brush apparatus (2) according to one of Claims 1 to 11, **characterized in that** the cross section (q24-q26) of the negative pole leads (24, 25, 26) is designed to be weakened by less than or equal to 1/5 of the cross section (q21-q23) of the positive pole leads (21, 22, 23).

13. Electrical machine, in particular starter for an internal combustion engine, having a commutator (4) and a brush apparatus (2), in particular according to one of Claims 1 to 14, wherein brushes (3) with at least one pair of brushes are arranged on the commutator (4) such that they can run offset in relation to one another, wherein each brush (3) is accommodated in a brush holder (5), each brush holder (5) is fastened to an axial end face of a brush plate (6), each brush (3) can be connected in series alternately either to a negative pole or a positive pole by means of a current-carrying device to form a pair of brushes, the brush plate (6) with pigtail leads to negative pole-side brushes (3) and a busbar (10) with pigtail leads to positive pole-side brushes (3) each form a current-carrying device, wherein at least one current-carrying device is designed as an apparatus for reducing heat dissipation and/or a fuse, and the current-carrying device is designed with a material weakening in the busbar (10) at least on one side.

## Revendications

1. Dispositif à balais (2) pour un moteur électrique, notamment un démarreur servant au démarrage d'un moteur à combustion interne, avec des balais (3) comprenant au moins une paire de balais, chaque balai (3) étant logé dans une monture à balai (5), chaque monture à balai (5) étant fixée à une plaque de balais (6) au niveau d'un côté avant axial, chaque balai (3) pouvant être connecté en série en alternance soit à un pôle négatif soit à un pôle positif via un dispositif de conduction de courant conduisant à une paire de balais, la plaque de balais (6) étant respectivement réalisée sous la forme d'un élément de conduction de courant doté d'un cordon de raccordement aux balais (3) situé du côté de pôle négatif et une barre conductrice (10) dotée d'un cordon de raccordement aux balais (3) situé du côté de pôle positif, au moins un dispositif de conduction de courant prenant la forme d'un dispositif de réduction d'une évacuation de chaleur et/ou d'un fusible et le dispositif de conduction de courant étant réalisé avec au moins une fragilisation de matériau unilatérale dans la barre conductrice (10).

2. Dispositif à balais (2) selon la revendication 1, **caractérisé en ce qu'**au moins un dispositif de conduction de courant de balais (3) d'une polarisation est réalisé avec un fusible.

3. Dispositif à balais (2) selon la revendication 1 ou 2, **caractérisé en ce que** le dispositif de conduction de courant situé du côté de pôle positif est réalisé avec un fusible.

4. Dispositif à balais (2) selon la revendication 3, **caractérisé en ce que** la fragilisation de matériau est réalisée dans la barre conductrice (10) de façon au moins unilatérale par le biais d'au moins une rainure (15, 16, 17).

5. Dispositif à balais (2) selon l'une quelconque des revendications 2 à 4, **caractérisé en ce que** la fragilisation de matériau dans une barre conductrice (10) de forme annulaire notamment réalisée sous la forme d'un support de montures à balai (5) est réalisée au moyen d'au moins une rainure (15, 16, 17) réalisée au niveau de la bague extérieure et d'au moins une rainure (15, 16, 17) réalisée au niveau de la bague intérieure.

6. Dispositif à balais (2) selon l'une quelconque des revendications 1 à 5, **caractérisé en ce que** la barre conductrice (10) est réalisée de façon à être fragilisée de façon identique des deux côtés au niveau de la surface circonférentielle (101, 102) axiale intérieure et extérieure.

7. Dispositif à balais (2) selon l'une quelconque des revendications 1 à 6, **caractérisé en ce que** la barre conductrice (10) est réalisée avec une résistance différente au niveau des surfaces circonférentielles (101, 102) axiales intérieure et extérieure.

8. Dispositif à balais (2) selon l'une quelconque des revendications 1 à 7, **caractérisé en ce que** l'au moins une rainure (15, 16, 17) prend pour l'essentiel une forme de coin, notamment avec des chanfreins arrondis.

9. Dispositif à balais (2) selon l'une quelconque des revendications 1 à 8, **caractérisé en ce qu'**au moins un cordon de raccordement (21-26) d'une polarité est réalisé de façon fragilisée.

10. Dispositif à balais (2) selon l'une quelconque des revendications 1 à 9, **caractérisé en ce qu'**au moins un cordon de raccordement (21, 22, 23) situé du côté de pôle positif est réalisé de façon fragilisée avec un rapport pouvant atteindre approximativement 1/3 par rapport à la section transversale d'au moins un cordon de raccordement (24, 25, 26) situé du côté de pôle négatif.

11. Dispositif à balais (2) selon l'une quelconque des revendications 1 à 10, **caractérisé en ce qu'**en présence d'une pluralité de cordons de raccordement (21 à 26) d'une polarité, le rapport total de la section transversale extérieure (Q45) du cordon extérieur (45) sur la somme des sections transversales fragilisées des cordons de raccordement (21 à 26) de tous les balais (21 à 26) d'une polarité est inférieur à 0,5.

12. Dispositif à balais (2) selon l'une quelconque des revendications 1 à 11, **caractérisé en ce que** la section transversale (q24-q26) des cordons de pôle négatif (24, 25, 26) est fragilisée de 1/5 par rapport à la section transversale (q21-q23) des cordons de pôle positif (21, 22, 23).

13. Moteur électrique, notamment démarreur pour un moteur à combustion interne, avec un commutateur (4) et un dispositif à balais (2), notamment selon l'une quelconque des revendications 1 à 14, des balais (3) avec au moins une paire de balais étant disposés de façon mobile et décalée les uns par rapport aux autres sur le commutateur (4), chaque balai (3) étant logé dans une monture à balai (5), chaque monture à balai (5) étant fixée à une plaque de balais (6) au niveau d'un côté avant axial, chaque balai (3) pouvant être connecté en série en alternance soit à un pôle négatif soit à un pôle positif via un dispositif de conduction de courant conduisant à une paire de balais, la plaque de balais (6) équipée du cordon de raccordement conduisant aux balais (3) situés du côté de pôle négatif et une barre conductrice (10) équipée du cordon de raccordement conduisant aux balais (3) situés du côté de pôle positif formant respectivement un dispositif de conduction de courant, au moins un dispositif de conduction de courant prenant la forme d'un dispositif de réduction d'évacuation de chaleur et/ou un fusible et le dispositif de conduction de courant étant réalisé dans la barre conductrice (10) avec une fragilisation de matériau au moins unilatérale.
